# EUROPÄISCHE PATENTANMELDUNG

(11) **EP 1 701 160 A1**
(43) Veröffentlichungstag der Anmeldung: **13.09.2006**
(21) Anmeldenummer: 05005415.4
(22) Anmeldetag: 11.03.2005
(51) Int. Cl.: G01N 33/00, F02C 6/08, B64F 5/00, B64D 13/00

(54) **Verfahren und Vorrichtung zum Überprüfen eines Luftfahrtstrahltriebwerks auf Ölleckagen**

(71) Anmelder: Lufthansa Technik AG, 22335 Hamburg (DE)
(72) Erfinder: Barke, Georg, 22457 Hamburg (DE); Schilling, York, 01099 Dresden (DE)
(74) Vertreter: Glawe, Delfs, Moll

(57) **Zusammenfassung**

Das Verfahren und die Vorrichtung zum Überprüfen eines Luftfahrtstrahltriebwerks auf Ölleckagen zeichnen sich dadurch aus, dass ein dem Verdichter des Triebwerks entnommener Nebenluftstrom auf Ölrückstände untersucht wird. Die Vorrichtung umfasst dazu eine Messeinrichtung (13) für den Ölgehalt des Nebenstroms, eine Verbindungseinrichtung (9) für eine Verbindung zum Innenraum des Verdichters und eine zwischen Messeinrichtung (13) und Verbindungseinrichtung (9) angeordnete Gasleitung (10). Durch die Erfindung wird es möglich, Ölrückstände im Luftstrom des Verdichters zu entdecken, ohne das Triebwerk zu zerlegen.

## Beschreibung

Die Erfindung betrifft ein Verfahren und eine Vorrichtung zum Überprüfen eines Luftfahrtstrahltriebwerks auf Ölleckagen.

In Flugzeugen wird die Druckluft für die Klimaanlage den Triebwerken entnommen. Ölleckagen im Triebwerk können dazu führen, dass die für die Klimatisierung verwendete Luft einen Ölgeruch aufweist. Da die Klimaanlage mit mehreren Triebwerken gleichzeitig verbunden sein kann, kann es schwierig sein, den Fehler einem bestimmten Triebwerk zuzuordnen. Bisher war es üblich, ein Triebwerk nach dem anderen zu zerlegen, bis der Fehler gefunden war.

Der Erfindung liegt die Aufgabe zugrunde, ein Verfahren und eine Vorrichtung zur Verfügung zu stellen, die ein Auffinden von Ölleckagen im Triebwerk ohne Zerlegen des Triebwerkes ermöglicht.

Das Verfahren löst die Aufgabe durch die Merkmale des Anspruchs 1. Vorteilhafte Ausführungsweisen finden sich in den Unteransprüchen 2 bis 21.

Erfindungsgemäß wird ein dem Verdichter des Triebwerkes entnommener Nebenluftstrom auf Ölrückstände untersucht. Die Erfindung hat erkannt, dass vom Luftstrom des Verdichters mitgeführte Ölmengen sich gleichmäßig im Luftstrom verteilen. Aus diesem Grund kann an einer beliebigen Stelle des Verdichters ein beliebiger Teil des Luftstroms als Nebenluftstrom entnommen werden und auf Ölrückstände untersucht werden. Aus den Ölrückständen im Nebenluftstrom kann unmittelbar auf die Ölrückstände im Luftstrom des Verdichters geschlossen werden.

Da der Luftstrom sich im Verdichter mit hoher Geschwindigkeit bewegt, werden die Ölrückstände regelmäßig in Form eines Aerosols mitgeführt, das heißt in Form einer feinen Verteilung von im Luftstrom schwebenden Partikeln. Das Verfahren kann darauf gerichtet sein, den Aerosolgehalt des Nebenluftstroms zu messen. Durchgeführt werden kann die Bestimmung des Aerosolgehalts mit Hilfe eines Aerosolspektrometers. Alternativ können für die Bestimmung des Gehalts an Ölrückständen andere Verfahren wie die Massenspektrometrie, die Flammenionisationsdetektion oder die Infrarotspektroskopie verwendet werden.

Neben den Partikeln der Ölrückstände enthält der Luftstrom weitere Partikel, etwa von mitgeführtem Staub. Häufig unterscheidet sich die Größe dieser weiteren Partikeln von der Größe der Partikel der Ölrückstände. Zur Unterscheidung der Partikel kann es vorteilhaft sein, verschiedene Größenklassen von Partikeln zu definieren und die Anzahl von Partikeln in den einzelnen Größenklassen zu bestimmen. Vorzugsweise umfassen die Größenklassen Partikel mit einem Durchmesser zwischen 0,05 µm und 10 µm, weiter vorzugsweise zwischen 0,1 µm und 5 µm, weiter vorzugsweise zwischen 0,2 µm und 2 µm. Bei Vorabmessungen wurde die Größe der Partikel bei mit Ölbestandteilen verunreinigter Ansaugluft gemessen. Es hat sich gezeigt, dass das Aerosol der Ölrückstände vorwiegend Partikel enthält, deren Größe innerhalb dieser Grenzen liegt. Das Verfahren soll also die Partikel erfassen, deren Größe zwischen der kleinsten Größenangabe und der größten Größenangabe liegt. Innerhalb des durch die beiden Größenangaben definierten Bereichs wird eine Einteilung in eine Mehrzahl von Größenklassen vorgenommen.

Der Aerosolgehalt kann anhand der Streuung von Weißlicht an Partikeln innerhalb eines Messvolumens gemessen werden. Die Verwendung von Weißlicht hat den Vorteil, dass unregelmäßig geformte Partikel gut erkannt werden. Bei monochromatischem Licht ist die Erkennung unregelmäßig geformter Partikel stärker fehlerbehaftet.

Partikel unterschiedlicher Stoffe können unterschiedliche Dichten haben. Um verschiedene Stoffe unterscheiden zu können, kann im Rahmen des erfindungsgemäßen Verfahrens die Massenkonzentration der Partikel innerhalb des Aerosols bestimmt werden

Der Luftstrom im Verdichter des Triebwerks kann unter einem Druck von mehr als 10 bar stehen. Unter diesem Druck steht auch der Nebenluftstrom, wenn er aus dem Verdichter austritt. Falls die Messeinrichtung für Messungen unter einem derart hohen Druck nicht ausgelegt ist, kann es vorteilhaft sein, den Druck des Nebenluftstroms vor der Messung zu reduzieren.

Die Reduzierung des Drucks sollte so durchgeführt werden, dass der Gehalt an mitgeführten Aerosolen möglichst unverändert bleibt. Bei herkömmlichen Druckminderern wird die Bewegungsrichtung des unter Druck stehenden Gases mehrfach geändert. Wegen der größeren Massenträgheit der Partikel des Aerosols schlägt sich bei solchen Richtungsänderungen an ein Teil des Aerosols an Bauteilen des Druckminderers nieder. Um dies zu vermeiden, kann es vorteilhaft sein, die Druckminderung dadurch zu erreichen, dass ein Teil des Nebenluftstroms vor der Messung an die Umgebung abgegeben wird.

Eine bessere Vergleichbarkeit der Messergebnisse wird erreicht, indem die Messung bei konstantem Druck der zu untersuchenden Luft vorgenommen wird. Vorzugsweise liegt der Druck während der Messung zwischen 2 bar und 15 bar, weiter vorzugsweise zwischen 5 bar und 10 bar, weiter vorzugsweise zwischen 7 bar und 9 bar.

Für die Vergleichbarkeit der Messergebnisse ist es weiterhin vorteilhaft, wenn die Messung bei einem konstanten Volumenstrom vorgenommen wird. Der Volumenstrom liegt vorzugsweise zwischen 0,5 1/min und 20 l/min, weiter vorzugsweise zwischen 1 1/min und 10 1/min, weiter vorzugsweise zwischen 3 l/min und 7 l/min.

Die Temperatur des Luftstroms im Verdichter kann über 300° C liegen. Mit dieser hohen Temperatur tritt der Nebenluftstrom aus dem Verdichter aus. Falls die Messeinrichtung für Messungen bei derartig hohen Temperatur nicht ausgelegt ist, kann die Temperatur des Nebenluftstroms vor der Messung reduziert werden. Für die Messung sollte die Temperatur des Nebenluftstroms zwischen 50° und 150°, vorzugsweise zwischen 80° und 120° liegen.

Das Verfahren kann auf einem Triebwerksprüfstand durchgeführt werden, es kann aber auch bei eingebautem Triebwerk durchgeführt werden. Auf dem Triebwerksprüfstand sind alle Nebenagregate, die aus dem Luftstrom des Verdichters mit Druckluft versorgt werden, wie etwa die Klimaanlage, nicht an das Triebwerk angeschlossen. Für normale Prüfläufe werden die Öffnungen, die nach dem Trennen der Anschlüsse in der Wand des Verdichters verbleiben, verschlossen. Für die Anwendung des Verfahrens kann es vorteilhaft sein, einen für die Versorgung der Klimaanlage vorgesehenen Anschluss nicht zu verschließen, sondern stattdessen den Nebenluftstrom über diesen Anschluss zu entnehmen.

Bei eingebautem Triebwerk sind alle Nebenagregate mit dem Triebwerk verbunden. Die zur Versorgung zur Klimaanlage vorgesehenen Anschlüsse sind nicht ohne weiteres zugänglich. Neben den für die Versorgung der Nebenagregate vorgesehenen Anschlüssen sind in der Wand des Verdichters Boroskopöffnungen vorgesehen. Diese Boroskopöffnungen sind so angeordnet, dass sie bei eingebautem Triebwerk zugänglich sind und die Untersuchung des Innenraums des Verdichters mit Hilfe eines Boroskops ermöglichen. Für die Anwendung des Verfahrens - insbesondere bei eingebautem Triebwerk - kann eine solche Boroskopöffnung für die Entnahme des Nebenluftstroms verwendet werden.

Neben den Triebwerken für den Antrieb des Flugzeugs umfasst ein Flugzeug eine Auxiliary Power Unit. Eine Auxiliary Power Unit ist ein Strahltriebwerk, das auf gleiche Weise arbeitet wie für den Antrieb bestimmte Triebwerke. Die Auxiliary Power Unit ist dazu ausgelegt, die Verbraucher an Bord des Flugzeugs zu versorgen. Insbesondere ist die Auxiliary Power Unit dann in Betrieb, wenn die für den Antrieb bestimmten Triebwerke nicht laufen, sie kann aber auch zusätzlich in Betrieb sein. Die Druckluft für die Klimaanlage kann sowohl der Auxiliary Power Unit als auch den für den Antrieb bestimmten Triebwerken entnommen werden. Da für den Ölgeruch der klimatisierten Luft sowohl die Auxiliary Power Unit als auch die für den Antrieb bestimmten Triebwerke verantwortlich sein können, ist es vorteilhaft, wenn das Verfahren sowohl an der Auxiliary Power Unit als auch an den für den Antrieb bestimmten Triebwerken durchgeführt werden kann.

Der Verdichter eines Triebwerks besteht aus einer Mehrzahl von hintereinander angeordneten Verdichterstufen. Die für Ölleckagen regelmäßig verantwortlichen Triebwerkslager sind vor der ersten Verdichterstufe angeordnet. Das dort austretende Öl ist also im gesamten Luftstrom des Verdichters von der ersten bis zur letzen Verdichterstufe enthalten. Aus diesem Grund kann der Nebenluftstrom einer beliebigen Verdichterstufe entnommen werden. Bevorzugt wird der Nebenluftstrom aber zwischen der vierten und zehnten Verdichterstufe entnommen, weil in diesem Bereich auch die Druckluft für die Klimaanlage entnommen wird.

Die Vorrichtung löst die Aufgabe durch die Merkmale des Anspruchs 22. Vorteilhafte Ausführungsformen finden sich in den Unteransprüchen 23-37.

Erfindungsgemäß umfasst die Vorrichtung eine Messeinrichtung für den Ölgehalt eines dem Verdichter des Triebwerks entnommenen Nebenluftstroms. Die Messeinrichtung ist über eine Gasleitung mit einer Verbindungseinrichtung verbunden. Die Verbindungseinrichtung ist dafür ausgelegt, eine Verbindung zum Innenraum des Verdichters herzustellen. Die Vorrichtung ist geeignet für eine Anwendung des Verfahrens aus Anspruch 1.

Wie oben dargelegt, sind je nachdem, ob das Triebwerk eingebaut ist oder sich auf einem Triebwerksprüfstand befindet, unterschiedliche Öffnungen in der Wand des Verdichters gut zugänglich. Die Verbindungseinrichtung kann für die Verbindung mit einer Boroskopöffnung des Triebwerks oder für die Verbindung mit einem zur Versorgung einer Klimaanlage vorgesehenen Anschluss ausgelegt sein. Die Verbindung wird über die am besten zugängliche Öffnung hergestellt.

Die Messeinrichtung kann so ausgelegt sein, dass der Druck des Nebenluftstroms während der Messung einen bestimmten Wert nicht übersteigen darf. Der Druck, mit dem der Nebenluftstrom aus dem Verdichter austritt, kann über diesem Wert liegen. In der Gasleitung zwischen Verbindungseinrichtung und Messeinrichtung kann deswegen ein Druckminderer angeordnet sein.

Um den Ölgehalt des Nebenluftstroms nicht zu verändern, soll der Druckminderer so ausgelegt sein, dass sich kein Öl an den Bauteilen des Druckminderers niederschlägt. Dies kann dadurch erreicht werden, dass der für die Messung vorgesehene Teil des Nebenluftstroms dem Druckminderer auf geradem Weg, ohne Richtungsänderungen durchquert und indem der Luftstrom beim Durchqueren des Druckminderers an möglichst wenig Bauteilen vorbeiströmt. Zu diesem Zweck kann der Druckminderer die folgenden Merkmale aufweisen: Der Druckminderer kann aus einem hohlen Gehäuse bestehen, an dessen Außenflächen eine Eintrittsöffnung für den Nebenluftstrom und mehrere Austrittsöffnungen angeordnet sind. Eine der Austrittsöffnungen, die vorzugsweise der Eintrittsöffnung gegenüber angeordnet ist, kann mit der Messeinrichtung verbunden sein. Weitere Austrittsöffnungen können als Überschussöffnungen wirken und für die Abgabe überschüssiger Luft an die Umgebung bestimmt sein. Für die Einstellung des Drucks können die Überschussöffnungen einzeln verschließbar sein.

Der Druckminderer stellt weiterhin sicher, dass die Luft immer in Bewegung bleibt. Ein Stillstand der Luft würde zu einem Absetzen der Partikel führen.

Um neben dem Druck auch den Volumenstrom während der Messung kostant halten zu können, kann die Vorrichtung einen Volumenstromregler umfassen. Damit der Volumenstromregler einem Nebenstrom mit konstantem Druck ausgesetzt ist, ist der Volumenstromregler vorzugsweise hinter dem Druckminderer angeordnet.

Durch einen Niederschlag des Öls an Bauteilen kann auch der Volumenstromregler eine Änderung des Ölgehalts des Nebenluftstroms bewirken. Um eine Beeinträchtigung der Messung zu vermeiden kann der Volumenstromregler hinter der Messeinrichtung angeordnet sein.

Auch in Notfällen soll es möglich sein, den vom Verdichter abgezweigten Nebenluftstrom zu unterbrechen. Zu diesem Zweck kann in der Gasleitung zwischen Verbindungseinrichtung und Messeinrichtung ein Magnetventil angeordnet sein, das die Gasleitung schließt, sobald es von der Spannungsversorgung abgetrennt ist.

Die Messeinrichtung für den Ölgehalt des Nebenluftstroms kann ein Aerosolspektrometer sein.

Die Vorrichtung kann dafür ausgelegt sein, die Messung auf einem Triebwerksprüfstand durchzuführen. Sie kann aber auch so gestalten sein, dass sie am eingebauten Triebwerk einsetzbar ist. Dies setzt insbesondere voraus, dass die Vorrichtung mit geeigneten Mitteln auf dem Flugfeld transportiert werden kann und dass die Gasleitung lang genug ist, um die Verbindung zum eingebautem Triebwerk herzustellen.

Anhand einer vorteilhaften Ausführungsform wird die Erfindung im folgenden unter Bezugnahme auf die beigefügten Zeichnungen beispielhaft beschrieben. Es zeigen:
- Figur 1: einen Schnitt durch den Verdichter eines Luftfahrtstrahltriebwerks;
- Figur 2: eine schematische Darstellung der erfindungsgemäßen Vorrichtung;
- Figur 3: einen Schnitt durch einen erfindungsgemäßen Druckminderer;
- Figur 4: eine schematische Darstellung der Funktionsweise eines Aerosolspektrometers; und
- Figur 5: eine graphische Darstellung der Ergebnisse einer erfindungsgemäßen Messung.

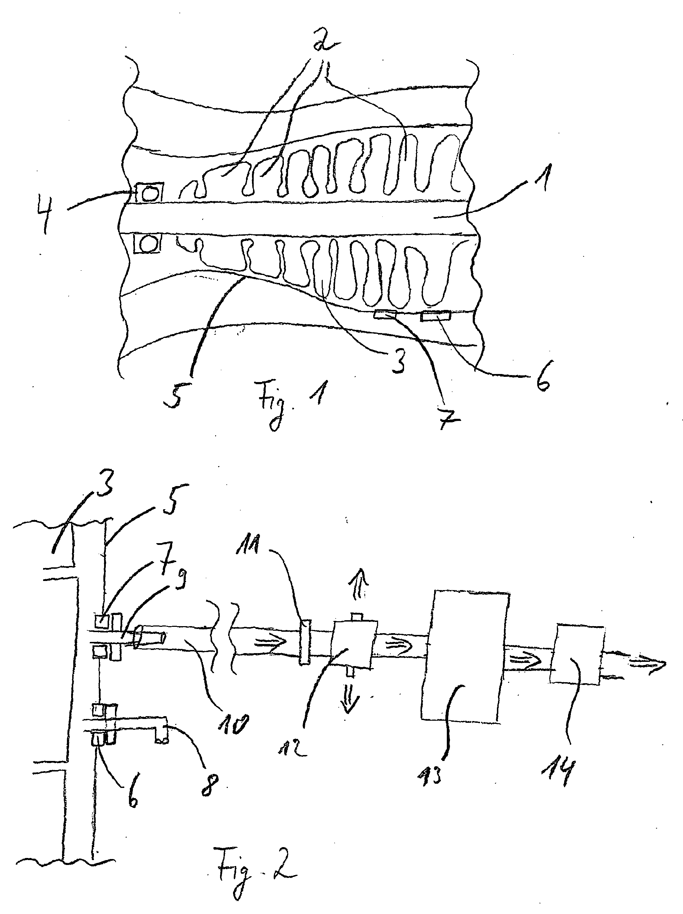

Ein Luftfahrtstrahltriebwerk umfasst neben Brennkammer, Turbine, Schubdüse, die allesamt nicht dargestellt sind, einen in Figur 1 gezeigten Verdichter. Der Verdichter hat die Aufgabe, zugeführte Umgebungsluft für die Verbrennung zu komprimieren. Im Verdichter folgen auf einer Welle 1 des Triebwerks mehrere Verdichterstufen 2 in axialer Richtung hintereinander. Jede Kompressorstufe umfasst ein mit der Welle 1 fest verbundenes Flügelrad 3, das die Luft von der vorhergehenden Verdichterstufe übernimmt, sie weiter komprimiert und an die nächste Verdichterstufe weiterleitet. Vor dem Verdichter ist die Welle 1 mit einem Lager 4 gelagert. In der den Verdichter umgebenden Wand 5 sind ein Anschluss 6 für die Entnahme von Druckluft für eine Klimaanlage und eine Boroskopöffnung 7 zum Untersuchen des Verdichterinnenraums mit Hilfe eines Boroskops angeordnet. Im Bereich der Boroskopöffnung 7 steht die Luft im Verdichter unter einem Druck von 8-13 bar und hat eine Temperatur von 350°.

Tritt aus dem Lager 4 wegen fehlerhafter Dichtung Öl aus, so vermischt sich dieses Öl mit dem Luftstrom im Verdichter. Durch die Flügelräder 3 verteilt sich das Öl gleichmäßig im Luftstrom, die am Anschluss 6 für die Versorgung der Klimaanlage entnommene Druckluft weist einen Ölgeruch auf.

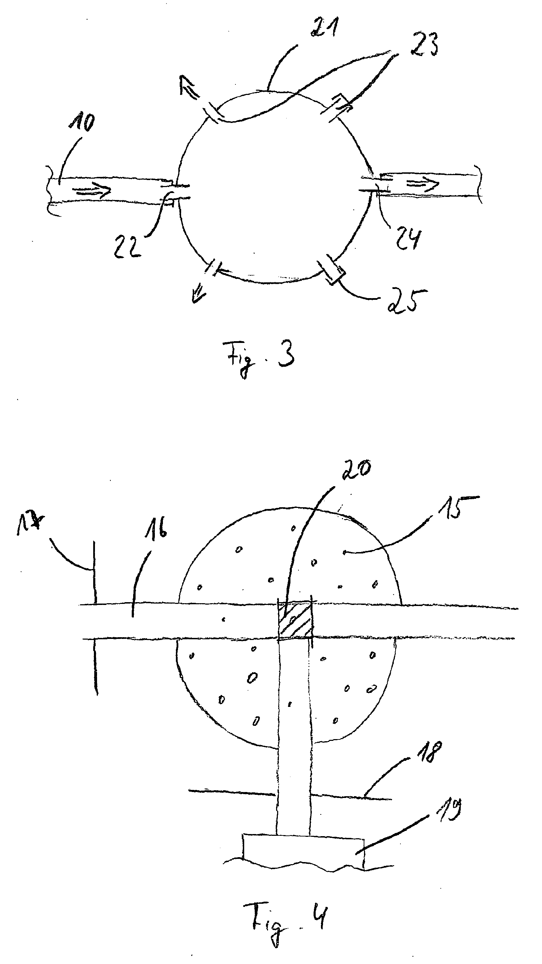

Die Verdichterwand 5 mit dem Anschluss 6 und der Boroskopöffnung 7 finden sich in der schematischen Darstellung der Figur 2 wieder. Im eingebautem Zustand des Triebwerks ist an den Anschluss 6 eine Druckluftleitung 8 für die Versorgung der Klimaanlage angeschlossen. Die Boroskopöffnung 7 ist im normalen Betrieb mit einer Abdeckung verschlossen. Für die Durchführung der Messung wurde die Abdeckung entfernt und durch eine Verbindungseinrichtung 9 ersetzt. Auf die Verbindungseinrichtung 9 ist eine Gasleitung 10 aufgesteckt, über die ein Teil des Luftstroms des Verdichters als Nebenluftstrom abgezweigt wird. Über ein Magnetventil 11 und einen Druckminderer 12 wird der Nebenluftstrom zu einem Aerosolspektrometer 13 geleitet. Hinter dem Aerosolspektrometer 13 ist ein Volumenstromregler 14 angeordnet.

Befindet sich das Triebwerk auf einem Triebwerksprüfstand, so wurde die Druckleitung 8 für die Klimaanlage zuvor beim Ausbau entfernt. In diesem Fall kann die Verbindungseinrichtung 9 mit dem Anschluss 6 verbunden werden und die Boroskopöffnung 7 durch eine Abdeckung verschlossen werden.

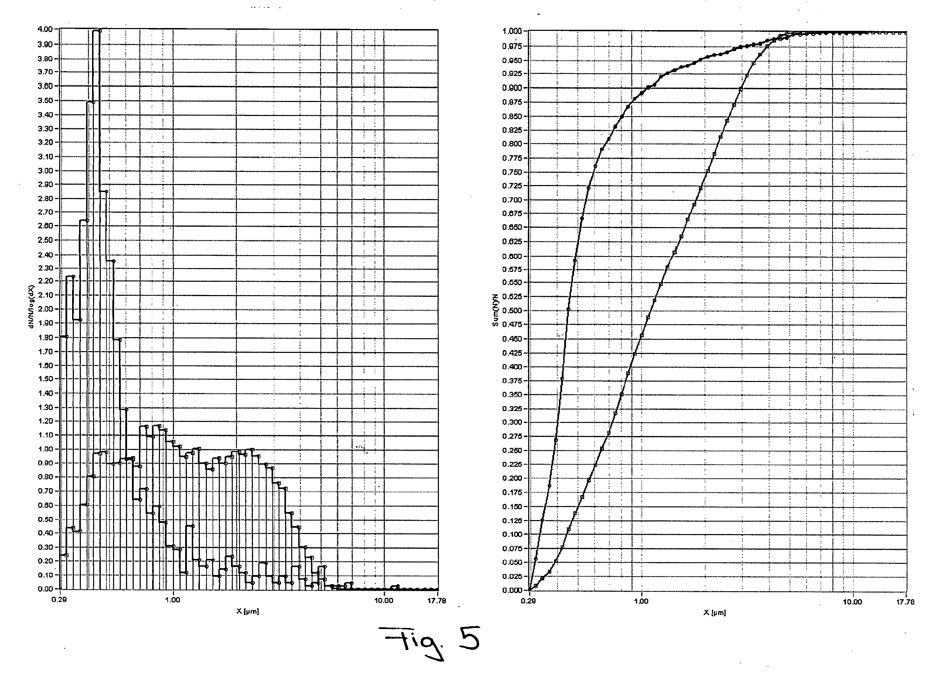

Die Funktionsweise des Aerosolspektrometers 13 ist in Figur 4 schematisch dargestellt. Der Nebenstrom, dessen Ölgehalt überprüft werden soll, strömt senkrecht zur Zeichnungsebene und führt eine Vielzahl von Ölpartikeln 15 mit sich. Ein Lichtstrahl 16 durchquert den Nebenstrom. Durch eine Blende 17 wird erreicht, dass der Lichtstrahl streng räumlich begrenzt ist. Trifft der Lichtstrahl 16 auf ein Partikel 15, so wird er an der Oberfläche des Partikels reflektiert. Durch eine Öffnung in einer Blende 18 wird ein Teil des reflektierten Lichts auf einen Photomultiplier 19 geleitet.

Aus der Intensität und Verteilung des vom Photomultiplier 19 aufgenommenen Lichts kann auf Anzahl und Größe der im durch die Blenden 17 und 18 definierten Messvolumen 20 enthaltenen Partikel 15 geschlossen werden.

Der durch die Boroskopöffnung 7 austretende Nebenstrom steht unter so hohem Druck und hat eine so hohe Temperatur, dass das Aerosolspektometer 13 den Nebenstrom nicht unmittelbar verarbeiten kann. Zur Reduzierung des Drucks des Nebenstroms ist deswegen in der Gasleitung 10 vor dem Aerosolspektrometer 13 ein Druckminderer 12 angeordnet.

Gemäß Figur 3 hat der Druckminderer ein zylinderförmiges Gehäuse 21 mit einer Eintrittsöffnung 22 und fünf Austrittsöffnungen 23, 24. Über die Eintrittsöffnung 22 ist der Druckminderer 12 mit der Boroskopöffnung 7 verbunden. Im Gehäuse gegenüber der Eintrittsöffnung 22 ist eine Austrittsöffnung 24 angeordnet, die eine Verbindung zum Aerosolspektrometer 13 herstellt. Durch weitere als Überschussöffnungen wirkende Austrittsöffnungen 23 tritt ein Teil des Nebenstroms in die Umgebung aus. Der Druck des Nebenstroms im Druckminderer 12 vermindert sich, gleichzeitig reduziert sich durch die Entspannung die Temperatur des Nebenstroms. Ein Teil des Nebenstroms gelangt durch die Austrittsöffnung 24 mit deutlich vermindertem Druck und deutlich verminderter Temperatur zum Aerosolspektrumeter 13. Die Überschussöffnungen 23 können zum Einstellen des Drucks mit Kappen 25 einzeln verschlossen werden.

Der Druckminderer 12 ist so gestaltet, dass der für die Messung verwendete Teil des Nebenstroms innerhalb des Druckminderers 12 nicht abgelenkt wird: Dadurch wird erreicht, dass der Aerosolgehalt des Nebenstroms beim Durchqueren des Druckminderers nahezu konstant bleibt, da nur ein geringer Niederschlag der Partikel 15 des Aerosols an Bauteilen des Druckminderers stattfindet. Durch die Überschussöffnungen 23 bleibt der Nebenstrom auch dann in Bewegung, wenn kein Teil des Nebenstroms durch das Messgerät fließt. Auch die ständige Bewegung des Nebenstroms trägt dazu bei, dass das Aerosol sich nicht niederschlägt.

Neben einem konstantem Druck ist es für die Vergleichbarkeit verschiedener Messung erforderlich, dass auch der Volumenstrom durch das Messvolumen 20 kostant ist. Zu diesem Zweck ist hinter dem Aerosolspektrometer 13 der Volumenstromregler 14 angeordnet. Zweckmäßigerweise wird als Volumenstromregler 14 eine Pumpe verwendet, die den Volumenstrom auch bei Druckschwankungen konstant hält. Auch im Volumenstromregler 14 kann sich ein Teil des Aerosols niederschlagen. Damit die Messung dadurch nicht beeinträchtigt wird, ist der Volumenstromregler 14 hinter dem Aerosolspektrometer 13 angeordnet.

Das Magnetventil 11 verschließt die Gasleitung 10 sobald es von der Spannungsversorgung getrennt wird.

Die Durchführung des erfindungsgemäßen Verfahrens mit Hilfe der beschriebenen Vorrichtung wird im folgenden beispielhaft anhand einer Messung an einem Triebwerk auf dem Triebwerksprüfstand beschrieben.

Das aus dem Flugzeug ausgebaute Triebwerk wird in den Triebwerksprüfstand eingesetzt und an eine Kraftstoffversorgung und eine Steuereinheit angeschlossen. An den bei der siebenten Verdichterstufe angeordneten Anschluss 6 für die Versorgung der Klimaanlage wird die Verbindungseinrichtung 9 angebracht und die Gasleitung 10 aufgesteckt.

Für die Messung wird das Triebwerk auf eine Drehzahl von bis zu 5000 gebracht (Take off Drehzahl). In diesem Betriebszustand beträgt der Druck des Luftstroms in der siebenten Verdichterstufe 9 bar und die Temperatur 300 °C.

Der durch die Verbindungseinrichtung 9 abgezweigte Nebenstrom gelangt durch die Gasleitung 10 zum Druckminderer 12. Bei allen vier Überschussöffnungen 23 sind die Kappen 25 entfernt, alle vier Überschussöffnungen 23 werden für die Druckminderung und die Entspannung des Nebenstroms genutzt. Im Inneren des Druckminderers reduziert sich der Druck des Nebenstroms auf 2 bar und die Temperatur auf 100 °C.

Der Volumenstromregler 14 ist auf einen konstanten Volumenstrom von 5 l/min eingestellt. Durch die Austrittsöffnung 24 tritt also ein Teilvolumenstrom des Nebenstroms von 5 1/min unter einem Druck von 2 bar und mit einer Temperatur von 100 °C in das Aerosolspektrometer 12 über.

Die Blenden 17 und 18 werden so gewählt, dass ein Messvolumen 20 von 100 mm³ entsteht.

Mit einem Aeroslspektrometer WELAS 2000 der Firma PALAS GmbH aus Karlsruhe, Deutschland wird unter diesen Bedingungen der Aerosolgehalt der das Messvolumen 20 durchströmenden Luft für einen Zeitraum von 1 Minute gemessen. Als Messergebnis erhält man die Anzahl von Partikeln 15 in verschiedenen Größenklassen, wie es in Fig. 5 dargestellt ist. Fig. 5 zeigt eine Einteilung in zehn Größenklassen, wobei die Partikel in der kleinsten Klasse einen mittleren Durchmesser von 0,178 µm haben und die Partikel in der größten Größenklasse einen mittleren Durchmesser von 0,649 µm.

Eine erste Messung wird vorgenommen, bei der der Verdichter der Auxiliary Power Unit normale Raumluft ansaugt. Wie Fig. 5 zeigt, ist die absolute Anzahl von entdeckten Partikeln gering und die meisten Partikel liegen in den Größenklassen 0,205 µm und 0,237 µm.

Bei einer zweiten Messung wird ein Aerosolgenerator vor der Ansaugöffnung des Verdichters angeordnet und die Ansaugluft mit einem Öl-Aerosol angereichert. Bei dieser Messung wird eine erheblich größere Anzahl von Partikeln entdeckt und die meisten Partikel liegen in den Größenklassen 0,237 µm und 0,274 µm. Man erkennt ferner, dass die Größenverteilung der Partikel bei mit Ölrückständen verunreinigter Luft erheblich breiter ist und wesentlich höhere Partikelhäufigkeiten in den jeweiligen Größenklassen auftreten. Die Verteilungsbilder unterscheiden sich sehr deutlich voneinander.

Diese Unterschiede ermöglichen es, mit Ölrückständen verunreinigte Luft von nicht verunreinigter Luft zu unterscheiden.

Sind im Luftstrom des Verdichters Partikel von weiteren Stoffen enthalten, beispielsweise Aluminiumpartikel vom Abrieb der Verdichterbauteile, können diese wegen ihrer anderen Dichte anhand der Massenkonzentration im Messvolumen von den Ölpartikeln unterschieden werden.

## Patentansprüche

1. Verfahren zum Überprüfen eines Luftfahrtstrahltriebwerks auf Ölleckagen, **dadurch gekennzeichnet, dass** ein dem Verdichter des Triebwerks entnommener Nebenluftstrom auf Ölrückstände untersucht wird.

2. Verfahren nach Anspruch 1, **dadurch gekennzeichnet, dass** der Aerosolgehalt des Nebenluftstroms gemessen wird.

3. Verfahren nach Anspruch 2, **dadurch gekennzeichnet, dass** die Partikelanzahl innerhalb verschiedener Größenklassen bestimmt wird.

4. Verfahren nach Anspruch 3, **dadurch gekennzeichnet, dass** die Größenklassen Partikel umfassen mit einem Durchmesser zwischen 0,05 µm und 10 µm, vorzugsweise zwischen 0,1 µm und 5 µm, weiter vorzugseise zwischen 0,2 µm und 2 µm.

5. Verfahren nach einem der Ansprüche 2 bis 4, **dadurch gekennzeichnet, dass** der Aerosolgehalt anhand der Streuung von Weißlicht an Partikeln innerhalb eines Messvolumens gemessen wird.

6. Verfahren nach einem der Ansprüche 2 bis 5, **dadurch gekennzeichnet, dass** der Aerosolgehalt mittels eines Aerosolspektrometers bestimmt wird.

7. Verfahren nach einem der Ansprüche 2 bis 6, **dadurch gekennzeichnet, dass** die Massenkonzentration der Partikel innerhalb des Aerosols bestimmt wird.

8. Verfahren nach einem der Ansprüche 2 bis 7, **dadurch gekennzeichnet, dass** der Druck des Nebenluftstroms vor der Messung reduziert wird.

9. Verfahren nach Anspruch 8, **dadurch gekennzeichnet, dass** ein Teil des Nebenluftstroms vor der Messung an die Umgebung abgegeben wird.

10. Verfahren nach Anspruch 8 oder 9, **dadurch gekennzeichnet, dass** die Messung bei konstantem Druck der zu untersuchenden Luft vorgenommen wird.

11. Verfahren nach Anspruch 10, **dadurch gekennzeichnet, dass** der Druck während der Messung zwischen 2 bar und 15 bar, vorzugsweise zwischen 5 bar und 10 bar, weiter vorzugsweise zwischen 7 bar und 9 bar liegt.

12. Verfahren nach einem der Ansprüche 1 bis 11, **dadurch gekennzeichnet, dass** die Messung bei einem konstantem Volumenstrom vorgenommen wird.

13. Verfahren nach Anspruch 12, **dadurch gekennzeichnet, dass** der Volumenstrom zwischen 0,5 1/min und 20 1/min, vorzugsweise zwischen 1 1/min und 10 1/min, weiter vorzugsweise zwischen 3 1/min und 7 1/min liegt.

14. Verfahren nach einem der Ansprüche 2 bis 13, dass die Temperatur während der Messung zwischen 50 °C und 150 °C, vorzugsweise zwischen 80 °C und 120 °C liegt.

15. Verfahren nach einem der Ansprüche 1 bis 14, **dadurch gekennzeichnet, dass** es auf einem Triebwerksprüfstand durchgeführt wird.

16. Verfahren nach einem der Ansprüche 1 bis 14, **dadurch gekennzeichnet, dass** es bei eingebautem Triebwerk durchgeführt wird.

17. Verfahren nach einem der Ansprüche 1 bis 16, **dadurch gekennzeichnet, dass** der Nebenluftstrom über eine Boroskopöffnung des Triebwerks entnommen wird.

18. Verfahren nach einem der Ansprüche 1 bis 16, **dadurch gekennzeichnet, dass** der Nebenluftstrom über einen zur Versorgung der Klimaanlage vorgesehenen Anschluss entnommen wird

19. Verfahren nach einem der Ansprüche 1 bis 18, **dadurch gekennzeichnet, dass** das Triebwerk für den Antrieb eines Flugzeugs bestimmt ist.

20. Verfahren nach einem der Ansprüche 1 bis 18, **dadurch gekennzeichnet, dass** das Triebwerk eine Auxiliary Power Unit ist.

21. Verfahren nach einem der Ansprüche 1 bis 20, **dadurch gekennzeichnet, dass** der Nebenluftstrom zwischen der 7. und 10. Verdichterstufe entnommen wird.

22. Vorrichtung zum Überprüfen eines Luftfahrtstrahltriebwerks auf Ölleckagen, **dadurch gekennzeichnet, dass** sie eine Messeinrichtung (13) für den Ölgehalt eines dem Verdichter des Triebwerks entnommenen Nebenluftstroms, eine Verbindungseinrichtung (9) für eine Verbindung zum Innenraum des Verdichters und eine zwischen Messeinrichtung (13) und Verbindungseinrichtung (9) angeordnete Gasleitung (10) umfasst.

23. Vorrichtung nach Anspruch 22, **dadurch gekennzeichnet, dass** die Verbindungseinrichtung (9) für die Verbindung mit einer Boroskopöffnung (7) des Triebwerks ausgelegt ist.

24. Vorrichtung nach Anspruch 22, **dadurch gekennzeichnet, dass** die Verbindungseinrichtung (9) für die Verbindung mit einem zur Versorgung einer Klimaanlage vorgesehenenen Anschluss (6) ausgelegt ist.

25. Vorrichtung nach einem der Ansprüche 22 bis 24, **dadurch gekennzeichnet, dass** in der Gasleitung (10) zwischen Verbindungseinrichtung (9) und Messeinrichtung (13) ein Druckminderer (12) angeordnet ist.

26. Vorrichtung nach Anspruch 25, **dadurch gekennzeichnet, dass** der Druckminderer (12) aus einem Gehäuse (21) mit Eintritts- (22) und Austrittsöffnungen (23, 24) für die Luft besteht und dass das Gehäuse (21) innen hohl ist.

27. Vorrichtung nach Anspruch 26, **dadurch gekennzeichnet, dass** das Gehäuse (21) eine Zylinderform hat und dass die Eintritts- (22) und Austrittsöffnungen (23, 24) an den Außenflächen des Zylinders angeordnet sind.

28. Vorrichtung nach Anspruch 26 oder 27, **dadurch gekennzeichnet, dass** der Druckminderer (12) eine Eintritts-(22) und eine Mehrzahl von Austrittsöffnungen (23, 24) umfasst.

29. Vorrichtung nach einem der Ansprüche 26 bis 28, **dadurch gekennzeichnet, dass** eine der Austrittsöffnungen (24) mit der Messeinrichtung (13) verbunden ist und dass diese Austrittsöffnung (24) im Gehäuse (21) der Eintrittsöffnung (22) gegenüber angeordnet ist.

30. Vorrichtung nach einem der Ansprüche 26 bis 29, **dadurch gekennzeichnet, dass** ein Teil der Austrittsöffnungen Überschussöffnungen (23) für die Abgabe überschüssiger Luft an die Umgebung sind.

31. Vorrichtung nach Anspruch 30, **dadurch gekennzeichnet, dass** die Überschussöffnungen (23) einzeln verschließbar sind.

32. Vorrichtung nach einem der Ansprüche 22 bis 31, **dadurch gekennzeichnet, dass** sie einen Volumenstromregler (14) für den Nebenluftstrom umfasst.

33. Vorrichtung nach Anspruch 32, **dadurch gekennzeichnet, dass** der Volumenstromregler (14) hinter dem Druckminderer (12) angeordnet ist.

34. Vorrichtung nach Anspruch 33, **dadurch gekennzeichnet, dass** der Volumenstromregler (14) hinter der Messeinrichtung (13) angeordnet ist.

35. Vorrichtung nach einem der Ansprüche 22 bis 34, **dadurch gekennzeichnet, dass** in der Gasleitung (10) ein Magnetventil (12) zum Schließen der Gasleitung (10) bei Unterbrechung der Spannungsversorgung angeordnet ist.

36. Vorrichtung nach einem der Ansprüche 22 bis 35, **dadurch gekennzeichnet, dass** die Messeinrichtung ein Aerosolspektrometer (13) ist.

37. Vorrichtung nach einem der Ansprüche 22 bis 36, **dadurch gekennzeichnet, dass** sie am eingebauten Triebwerk einsetzbar ist.
